# EUROPEAN PATENT SPECIFICATION

(11) **EP 3 044 822 B1**
(45) Date of publication and mention of the grant of the patent: **13.06.2018**
(21) Application number: 14844016.7
(22) Date of filing: 22.08.2014
(51) Int. Cl.: H01M 4/36, H01M 4/525, H01M 10/052, C01G 53/00, H01M 4/62, H01M 4/131, H01M 4/1391, H01M 4/505, B60L 11/18, H01M 4/02

(54) **WATER-BASED CATHODE SLURRY FOR A LITHIUM ION BATTERY**
KATHODENAUFSCHLÄMMUNG AUF WASSERBASIS FÜR EINE LITHIUM-IONEN-BATTERIE
SUSPENSION AQUEUSE ÉPAISSE DE CATHODE POUR BATTERIE AU LITHIUM-ION

(30) Priority: 12.09.2013 EP 13184077
(43) Date of publication of application: 20.07.2016
(73) Proprietor: Umicore, 1000 Brussels (BE); Umicore Korea Ltd., Chunan-City 330-200 (KR)
(72) Inventor: PAULSEN, Jens, Daejeon 305-707 (KR); HONG, HeonPyo, Cheonan (KR); AHN, Hyo Sun, Cheonan 331-200 (KR)
(74) Representative: Knockaert, Guy
(86) International application number: PCT/IB2014/064018
(87) International publication number: WO 2015/036882

(56) References cited:
- WO-A1-2012/111116
- WO-A1-2012/111116
- WO-A1-2013/010936
- JP-A- 2012 009 268
- KR-A- 20130 084 362
- US-A1- 2008 107 966
- US-A1- 2012 270 104
- US-A1- 2012 270 104

## Description

### Technical Field and Background

The invention relates to water-based electrode coating technologies for positive electrodes of lithium ion rechargeable batteries.

A lithium ion battery is basically a jellyroll, impregnated with electrolyte, attached to current connectors, and inserted into a battery case. A jellyroll consists of at least a negative electrode (anode) a porous electrically insulating membrane (separator) and a positive electrode (cathode). Typically an electrode is a metal foil (or substrate) coated on both sides by an electro active composite. The electro active composite is porous and consists of particles of the active material, it contains a binder to glue the particles to each other and onto the substrate and it contains a conductive additive to increase the electrical conductivity. The porosity will - after battery assembly - be filled by electrolyte.

The negative electrode (anode) typically consists of a copper foil as current collector, the active composite consists of typically >90% graphite type carbon, the remaining <10% consist of binder as well as conductive additives.

The traditional electrode preparation technology is a wet coating process, where viscous slurry is coated onto the current collector substrate. In the traditional approach the slurry is a NMP (N-Methyl-pyrrolidone) organic solvent based dispersion. The binder, typically a PVDF (Polyvinylidene fluoride) based copolymer, is dissolved in the solvent and conductive additives as well as the electro-active electrode material are suspended in the slurry. NMP/PVDF based slurries have good visco- mechanical properties which allow high quality industrial coating at high coating speed, typically several km per hour.

PVDF is not the best binder but very suitable for the organic NMP based coating technology. An important aspect of PVDF as binder is the so-called swelling ability. The electrolytes used in the battery cannot dissolve but soften the PVDF binder. The resulting "swollen" PVDF has Li ionic conductivity. After drying the electrode, parts of the active material particles are covered by PVDF. If PVDF would not be an ionic insulator, the surface coverage would block the transport of lithium. Due to the ion conductive properties of the swollen polymer, and despite of PVDF coverage, a good capacity and rate performance is achieved. NMP is flammable and has some toxicity. NMP vapors are of major concern due to inhalation and explosion danger, and cannot be released to the environment in large quantities.

The traditional organic coating process, i.e. coating of NMP/PVDF based slurries on the current collector substrate, is not cheap. NMP has a relatively high evaporation temperature, so drying the electrode is performed at relatively high temperature (e.g. 120°C). Due to the cost and environmental reasons, NMP needs to be recycled out of the hot drying gas. Recycling can be done by condensation, but requires energy and relatively expensive installations. The flammability of NMP demands that equipment is explosion-safe, which further increases its cost. Therefore it was attempted to replace the organic NMP based coating process by a water-based coating process. The attempts have been fully successful for the negative electrode (anode). Whereas 10 years ago anodes were coated exclusively by an NMP process, today a dominating fraction of anodes are prepared by a water-based coating process. The advantages of the water-based coating process are (a) non flammability - and hence no need for explosion proof equipment, (b) a lower drying temperature and (c) no solvent recycling is needed.

A typical water-based slurry for anode coating is prepared as follows: CMC (carboxymethyl cellulose) is dissolved in water - for improving the visco-mechanical properties - allowing for industrial coating operations. At the same time CMC acts as surfactant for the (normally hydrophobic) graphite based carbon electro-active material and the carbon conductive additive. After electrode drying CMC remains, acting as binder, but CMC is brittle. To soften the electrode, make it more elastic and to improve the adhesion between substrate and coating layer SBR (styrene-butadiene rubber) fine particles are added as binder to the slurry. The binder particles do not dissolve. Such advanced SBR latex binders can be obtained from e.g. JSR Corporation (Tokyo, Japan).

In the case of the positive electrode (cathode) a similar approach is desired. Similar to the anode technology, in the case of cathodes, water-based coatings will decrease cost and be environmentally friendlier. However, contrary to anodes, water-based coating for cathodes is more difficult. The main issue is the fact that many cathode materials are not inert in water, which causes problems and complicates the implementation of water-based coating process for cathodes. An example of the use of the water-based coating technology for preparing cathodes can be found in US2013-0034651. Within the battery, cathodes are at high voltage (when measured versus Li/Li+). Whereas rubber is stable at the low anode voltage most rubbers decompose at high voltage. Therefore, more adapted rubbers have been developed, such as fluorinated acrylic latex rubbers. One such binder is a Fluorine Acrylic Hybrid Latex (TRD202A), and is supplied by JSR Corporation. In the description, we refer to it as "FAP": Fluorine Acrylate Polymer.

In WO2012-111116 a lithium-ion secondary battery is provided which has a positive electrode formed of active material and a binder in an aqueous solvent. A surface of the positive electrode active material is coated by a hydrophobic coating and the binder dissolves or disperses in the aqueous solvent. The positive electrode active material powder has secondary particles ranging from approximately 1 µm to 15 µm, and is formed by agglomeration of a large number of microparticles of active material. The positive electrode active material coated by a water-repellent resin can be obtained by preparing a paste-like mixture by dispersing and mixing the material and a water-repellent resin, such as PVDF, in an appropriate solvent and drying the paste-like mixture between 100° C and 180° C. This approach is not new, a similar approach was already described in WO2009-097680, albeit for other reasons. The current authors observed that the coating obtained by the processes in WO2012-111116 and WO2009-097680 is very unsatisfactory in solving the problems it is meant to solve. Neither a complete coating, nor a sufficient protection of the cathode surface from water attack, nor a satisfying adhesion of the coating layer to the cathode material is achieved. What is achieved is only a partial coating by a relatively thick and poorly adhering polymer layer that does not penetrate into the grain boundaries and therefore only parts of the secondary particles and not the primary particles are protected. This was in some detail explained in WO2011-054440.

It is expected that in the future the lithium battery market will be increasingly dominated by automotive applications. Automotive applications require very large batteries. The batteries are expensive and must be produced at the lowest possible cost. A significant fraction of the cost comes from the positive electrodes. Providing these electrodes by a cheap and environmentally friendly process can help to lower cost and boost market acceptance. Therefore water-based coating technology is an asset for the developing market of lithium batteries for automotive applications. Automotive batteries also need to last for many years.

During this time batteries do not always operate. A long battery live is related to 2 properties: (a) small loss of capacity during storage and (b) high cycle stability. Many automotive batteries, especially for hybrid cars, require a high pulse power, which is required to enable efficient regenerative braking as well as for supplying sufficient power during acceleration.

A critical property related with pulse power is direct current resistance (DCR). A low DCR resistance is essential to achieve a high pulse power. In the past, it has been a problem to improve the DCR resistance of cathodes prepared with a water-based electrode coating process. Furthermore, it was a problem to limit the increase of DCR during the long term operation of the battery.

The present invention aims to provide water-based coating compositions for positive electrodes that are particularly suitable for these automotive battery applications, especially in view of the DCR problems cited before.

### Summary

Viewed from a first aspect, the invention provides a water-based lithium ion battery cathode slurry comprising a conductive agent and/or a water-based binder and comprising a cathode active material comprising a lithium transition metal oxide powder wherein the lithium transition metal oxide powder consists of agglomerates of primary particles, the primary particles comprising a coating layer comprising a polymer. The coating layer may be hydrophobic. The polymer is a fluorine-containing polymer comprising at least 50 wt% of fluorine.

In one embodiment, the coating comprises a first inner and a second outer coating layer, the second outer layer comprising the fluorine-containing polymer, and the first inner layer consisting of a reaction product of the fluorine-containing polymer and the surface of the primary particles. The invention also provides a water-based lithium ion battery cathode slurry comprising a cathode active material comprising a lithium transition metal oxide powder wherein the lithium transition metal oxide powder consists of agglomerates of primary particles, the primary particles comprising a coating layer comprising a polymer, wherein the polymer is a fluorine-containing polymer comprising at least 50 wt% of fluorine, and wherein the coating comprises a first inner and a second outer coating layer, the second outer layer comprising the fluorine-containing polymer, and the first inner layer consisting of a reaction product of the fluorine-containing polymer and the surface of the primary particles.

In the previous embodiments, the reaction product may comprise LiF. The lithium in LiF may originate from the primary particles surface. The fluorine in the reaction product comprising LiF may originate from partially decomposed fluorine-containing polymer present in the second outer layer. In one embodiment the first inner coating layer consists of a LiF film with a thickness of at least 0.5 nm, preferably at least 0.8 nm, and most preferably at least 1 nm. In some embodiments, the fluorine-containing polymer may be either one of PVDF, PVDF-HFP or PTFE, and the fluorine-containing polymer is preferably composed of agglomerated primary particles having an average particle size of between 0.2 and 0.5 µm.

In an embodiment in combination with previous embodiments, the lithium transition metal oxide has the general formula Li₁₊ₐM₁₋ₐO_{2±b} M^{'}ₖSₘ with -0.03<a<0.06, b<0.02, M being a metal based composition, wherein at least 95% of M consists of either one or more elements of the group Ni, Mn, Co, Mg and Ti; and wherein M' consists of either one or more elements of the group Ca, Sr, Y, La, Ce and Zr, with 0≤k≤0.1, k being expressed in wt%; and 0≤m≤0.6, m being expressed in mol%. Here it may be that M =NiₓMn_{y}Co_{z}, with x>0, y>0, z>0 ; x+y+z=1; and x/y ≥ 1. In one embodiment 0.33≤x≤0.7, and 0.1<z<0.35. In another embodiment 0.4≤x≤0.6, and x/y>1. In a further embodiment k=m=0, 0≤a≤0.04, x+y+z=1, 0.4≤x≤0.6, x/y>1, and 0.1<z<0.35.

It is clear that further product embodiments according to the invention may be provided with features that are covered by the different product embodiments described before. The conductive agent may be Super-P or graphite and the water-based binder may be such as Carboxymethyl Cellulose (CMC) or Fluorine Acrylate polymer (FAP).

Viewed from a second aspect, the invention can provide the use of the water-based lithium ion battery cathode slurry of any of the embodiments described above, in the manufacturing of a cathode for a lithium ion battery, wherein the cathode comprises an aluminum substrate. Also the invention can provide the use of the water-based lithium ion battery cathode slurry of any of the embodiments described above, in the manufacturing of a lithium ion battery for automotive applications.

The current invention discloses a double shell coated Ni-Mn-Co or NMC based cathode material for application in a water-based coating. The outer shell is a polymer, and the inner shell is a thin film of LiF. Such a material is known from WO2011-054440, where the structure, advantages and methods for preparing it are discussed in detail. The outer shell increases the water stability of the cathode material. Less surface coverage of water will correlate with less damage to the cathode and less ion exchange, the ion exchange not being desired, since it is responsible for the increase of the pH of the slurry and the strong pH recovery, as will be discussed in detail below. The inner shell is LiF and originates from the reaction between the polymer and the residual base present on or near the surface of the cathode material. The reaction effectively decomposes the surface base thus reducing the base potential of the cathode material. In WO2011-054440 the double shell coated active material is proposed for a traditional NMP (N-Methyl-pyrrolidone) organic solvent based dispersion. This patent is concerned with the uptake of water vapor and CO₂ from the environment by exposure of the material to air, during the storage time between powder sintering and incorporation in an electrode in the battery makers' factory. As the reactions occurring by direct immersion in an aqueous binder solution are of somewhat different nature and much more aggressive no conclusions can be drawn from these air exposure tests regarding the use in combination with water based binders. Indeed, one of the main causes of the decrease in performance of a battery with a water based binder in direct contact with the lithium transition metal powder is the damage of the cathode surface which causes undesired side reactions in the battery. This is confirmed by M. Spreafico et al. , "PVDF Latex As a Binder for Positive Electrodes in Lithium-Ion Batteries", in Industrial & Engineering Chemistry Research, published on the internet on February 18, 2014. Spreafico specifies that the water could progressively damage the surface of the particles, thereby catalyzing undesired reactions from the cathode, promoting irreversible reactions and causing capacity loss during cycling.

### Brief description of the drawings

Figure 1.1: Rate capability results (NMP based binder full cell) of water-based binder coated NMC532
Figure 1.2: Temperature properties (NMP based binder full cell) of water-based binder coated NMC532
Figure 1.3: DCR results (NMP based binder full cell) of water-based binder coated NMC532
Figure 1.4: DCR increase results (NMP based binder full cell) of water-based binder coated NMC532
Figure 1.5: Recovery capacity results (NMP based binder full cell) of water-based binder coated NMC532
Figure 1.6: Retention capacity results (NMP based binder full cell) of water-based binder coated NMC532
Figure 1.7: Cycle stability results (NMP based binder full cell) of water-based binder coated NMC532 at room temperature
Figure 1.8: Cycle stability results (NMP based binder full cell) of water-based binder coated NMC532 at 45°C
Figure 2.1: Rate capability results of NMC532 in NMP based binder system and water-based binder system
Figure 2.2: DCR of NMC532 in NMP based binder system and water-based binder system
Figure 2.3: DCR increase of NMC532 in NMP based binder system and water-based binder system
Figure 2.4: Retention capacity of NMC532 in NMP based binder system and water-based binder system
Figure 2.5: Recovery capacity of NMC532 in NMP based binder system and water-based binder system
Figure 2.6: Cycle stability results at room temperature of NMC532 in NMP based binder system and water-based binder system
Figure 2.7: Cycle stability results at 45°C of NMC532 in NMP based binder system and water-based binder system
Figure 3.1: Rate capability results of NMC532 in NMP based binder system and water-based binder system
Figure 3.2: Temperature properties of NMC532 in NMP based binder system and water-based binder system
Figure 3.3: DCR of NMC532 in NMP based binder system and water-based binder system
Figure 3.4: DCR increase of NMC532 in NMP based binder system and water-based binder system
Figure 3.5: Retention capacity of NMC532 in NMP based binder system and water-based binder system
Figure 3.6: Recovery capacity of NMC532 in NMP based binder system and water-based binder system
Figure 3.7: Cycle stability results at room temperature of NMC532 in NMP based binder system and water-based binder system
Figure 3.8: Cycle stability results at 45°C of NMC532 in NMP based binder system and water-based binder system
Figure 4: FESEM micrograph of Li Ni-Mn-Co oxide /1% PVDF mixture heated at 250°C.
Figure 5.1: SEM micrographs of coated electrodes (not compacted by roll pressing) Left: Water-based coating - no addition of acid. Right: With addition of acid.
Figure 5.2: Comparing the pH after equilibration, 1 min after adding acid and 2hrs after adding acid for 4 different samples.
Figure 6.1: Rate capability of NMC532 and double shell NMC532 in Water-based binder system full cell
Figure 6.2: Temperature properties of NMC532 and double shell NMC532 in Water-based binder system full cell
Figure 6.3: DCR of NMC532 and double shell NMC532 in Water-based binder system full cell
Figure 6.4: DCR increase of NMC532 and double shell NMC532 in Water-based binder system full cell
Figure 6.5: Retention capacity of NMC532 and double shell NMC532 in Water-based binder system full cell
Figure 6.6: Recovery capacity of NMC532 and double shell NMC532 in Water-based binder system full cell
Figure 6.7: Cycle stability at room temperature (Water-based binder full cell) of NMC532 and double shell NMC532
Figure 6.8: Cycle stability at 45°C (Water-based binder full cell) of NMC532 and double shell NMC532

### Detailed description

The cathodes of interest are Ni-Mn-Co or NMC based cathode material. Their general composition is Li[LiₓM₁₋ₓ]O₂ where M is Ni_{1-a-b}MnₐCo_{b}. We will further on refer to these lithium oxide compositions as "NMC". M can further be doped by up to 5 mol% of a dopant A, which may be one or more selected from Mg, Al, Ti, Zr, Ca, Ce, Cr, W, Si, Fe, Nb, Sn, Zn, V and B. Known examples are: a=b=0.33 resulting in a "111" compound; or a=0.30, b=0.20 resulting in a "532" compound; or a=b=0.20 resulting in a "622" compound. These materials have a layered crystal structure. The structure is tightly related to the MOOH structure. That means that when NMC is immersed in water, a certain amount of Li will undergo ion exchange for protons, which we refer to as the "base potential" of the NMC. The dissolved Li causes an increase of the pH of the water. Depending on the NMC composition, its surface area and the amount of water, the ion exchange will equilibrate and result in an increased value for pH.

Practically,
- the higher the NMC : water ratio,
- the higher the Li:M ratio of the cathode active material,
- the higher the Ni:Mn ratio of the cathode material, and
- the larger the available surface area for the exchange,
the higher the base potential of the cathode and the higher the final pH of the water-based slurry will be. Water-based slurry making may be quite difficult because the cathode to water ratio is very high, thus resulting in very high pH of the small amount of water in the slurry.

The invention addresses the two main problems that are expected in this respect:
1) the ion exchange of Li for protons damages the cathode material, and
2) the high pH of the slurry causes problems during coating.

During water-based coating the cathode material is exposed to water. Water can damage the surface of the cathode articles. Cycle stability and calendar live, the latter being measured by monitoring the recovered capacity after storage are dominated by the surface properties. Therefore it could be that water-based coating causes poor cycle stability as well as poor calendar live. The development of water-based coating technology without deteriorating cycle stability and calendar live is achieved by the present invention. Aluminum foil is almost exclusively used as current collector for cathodes. Aluminum combines a high stability against corrosion at high Li voltage with good mechanical properties, light weight and high electrical conductivity. Unfortunately, Al foil is not resistant to a corrosive attack by alkaline solutions having a high pH. A water-based NMC slurry, especially if the Ni:Mn ratio in the NMC is high, is a relatively concentrated alkaline LiOH solution. Even in the few minutes between coating and drying the water-based slurry can severely corrode the aluminum current collector foil. There are 3 ways to solve this issue: (a) increase the corrosion resistance of aluminum, (b) add acid to the slurry to neutralize the alkaline solution to make it less corrosive and (c) reduce the base potential of the cathode material. Solution (a) is limited to the availability of industrial qualities of aluminum.

Solution (b) focuses on a decrease of the pH of the water-based slurry through acid addition. In this way the slurry can be coated and aluminum foil is not corroded. However, after adding the acid, the slurry has not reached a steady state, and the pH will recover - its value will start to increase again. This "pH recovery" is typical for NMC and will be stronger when the base potential of the NMC is higher, for example for a higher Ni:Mn NMC. Other cathode materials like LiCoO₂, LiMn₂O₄ based spinel and olivine LiFePO₄ have either less base potential or show fewer tendencies for pH recovery. The risk of pH recovery causes the need for the slurry to be coated immediately. This is very difficult to realize under mass production conditions, where the coating processes often continue for many hours. During this time key properties like viscosity, degree of dispersion etc. need to remain stable. If however the pH changes then the key properties (which depend on pH) change and the coating process becomes unstable. Any instability like change of pH, viscosity, etc. during the coating will be a severe issue. If the NMC cathode material has a higher base potential more acid needs to be added and the pH recovery will be more severe, causing even more severe slurry issues. Therefore the invention provides NMC cathode materials with improved water stability, showing fewer tendencies for pH recovery when applied in the slurry.

Regarding solution (c) different NMC materials are available: within the NMC triangle (LiNiO₂ - LiCoO₂ - LiNi_{1/2}Mn_{1/}O₂) 3 major regions are of interest:
1: LiCoO₂: "LCO" can be prepared in a way that it has very low base potential and small pH recovery after acid addition. Therefore LiCoO₂ in principle is suitable as cathode material for water-based coating; and no reduction of the base potential is required. However, it is known that LCO has serious drawbacks. A main drawback is the relative scarcity of Co resources related to the relatively high cost of cobalt metal. Still worse, historically the cobalt price shows wild fluctuations, and these fluctuations possibly increased the need to find substitutes for LiCoO₂. LCO is for this and other reasons not the preferred material for use in automotive applications.
2: NMC with Ni: Mn≤1: materials with Ni:Mn near to unity are robust, relatively water stable and have a relatively low base potential. Examples for such cathode material are the 442 or 111 NMC (Li[Li_{0.05}M_{0.95}]O₂ with M = Ni_{0.4}Mn_{0.4}Co_{0.2} or M= Ni_{0.33}Mn_{0.33}Co_{0.33}). They are in principle suitable for water-based coating and a surface treatment to reduce the base potential according to the invention will be helpful but is less required.
3: NMC with high Ni:Mn>1: as the Ni:Mn ratio in NMC increases, the cathode capacity increases, and less cobalt addition is needed. Therefore cathode materials like 532 or 622 (LiMO₂ with M = Ni_{0.5}Mn_{0.3}Co_{0.2} or Ni_{0.6}Mn_{0.2}Co_{0.2}, which may be doped) combine high capacity with relatively low raw materials price. They promise a cheap cost per Ah (Ampere hour) of the final battery capacity. Hence it is very beneficial if these advantages can be used in automotive applications. However, as the Ni:Mn increases the base potential increases dramatically, and it would at first sight be very difficult to apply water-based electrode coatings for high Ni NMC cathode materials. This problem has been solved by the present invention.

Of special interest for the automotive industry are the NMC cathode materials with "intermediate high" NMC, like 532, with 1<Ni:Mn<4, and more particularly 1.2<Ni:Mn≤2. These cathode materials - due to low their cost per Ah of capacity - are presently used in low end batteries. The competition on cost is very strong so a cost saving by applying water-based coating process becomes important, also for the low end applications. At the same time intermediate high NMC cathodes like 532 are promising for water-based coating because the needed reduction of base content in the slurry is limited, and a slight reduction of base content or an improvement of water stability can be sufficient to allow a successful water-based coating. For these materials the present invention is particularly interesting.

Another aspect in the invention is the stability of the slurry dispersion. An industrial coating operation requires that the slurry remains well dispersed during coating. Depending on the surface charge of the solid components in the solvent - including the cathode powder and the usual carbon additive - a dispersion can be stable or can tend to agglomerate. Often a pH region exists where a dispersion is stable, but if the pH changes the slurry can become unstable. In order to achieve a stabilized slurry it is desirable to limit the base potential of the cathode powder. The invention provides NMC cathode materials with less interaction with water, giving more freedom to adjust the pH of the slurry in a way to stabilize the dispersion and avoid agglomeration.

When applying a traditional organic NMP/PVDF based coating the electrode active material might be partially coated by PVDF binder. In the battery the PVDF coating will swell in the electrolyte, thus becoming conductive for Li ions. Similar, after water-based coating, when using a CMC thickener, after drying the electro active cathode material can be partially or fully coated by CMC. Contrary to PVDF however, CMC does not swell in the electrolyte and tends to create a surface layer with low Li ionic conductivity. This layer causes an increased DCR resistance. The invention addresses the key issue to develop water-based coating technology which results in a low DCR resistance and to reduce the increase of DCR during battery operation. The current invention teaches that the existence of a polymer surface which can swell in electrolyte creates additional diffusion paths that can reduce the DC resistance.

Also, when applying NMP/PVDF based coating the cathode particles are connected by a flexible polymer which allows for some elasticity. For water-based coating the elasticity is provided by addition of rubber particles (SBR in the case of anodes). For cathodes in the current invention a fluorinated acrylic latex (FAP) rubber is used. Preliminary data reveal that - despite of the increased stability of the cathode condition (under high Li voltage) - the stability is not sufficient to prevail under abusive conditions. The development of a more elastic cathode material allows reducing the needed amount of latex, so that bulging is reduced.

As said before, to avoid aluminum corrosion and to improve slurry stability there is need for cathode materials which have a high capacity but a low base content, which seems contradictory. Having a hydrophobic surface promises higher water stability. An elastic polymer surface film, as supplied in the present invention, promises better electrode mechanical properties, particularly a reduction of brittleness is expected. If the surface film swells in electrolyte then we can expect a higher rate performance and less DCR resistance.

### Experimental details

### 1) Coating

the organic NMP based coating process is described in Example 1. The water-based coating process is described in Example 2.

### 2) Full cell assembly

For full cell testing purposes, the prepared positive electrodes (cathode) are assembled with a negative electrode (anode) which is typically a graphite type carbon, and a porous electrically insulating membrane (separator). The full cell is prepared by the following major steps: (a) electrode slitting (b) electrode drying (c) jellyroll winding (d) packaging.
(a) electrode slitting: after NMP or water-based coating the electrode active material might be slit by a slitting machine. The width and length of the electrode are determined according to the battery application.
(b) attaching the taps: there are two kinds of taps. Aluminum taps are attached to the positive electrode (cathode), and copper taps are attached to the negative electrode (anode).
(c) electrode drying: the prepared positive electrode (cathode) and negative electrode (anode) are dried at 85°C to 120°C for 8 hrs in a vacuum oven.
(d) jellyroll winding: after drying the electrode a jellyroll is made using a winding machine. A jellyroll consists of at least a negative electrode (anode) a porous electrically insulating membrane (separator) and a positive electrode (cathode).
(e) packaging: the prepared jellyroll is incorporated in a 800 mAh cell with an aluminum laminate film package, resulting in a pouch cell. Further, the jellyroll is impregnated with the electrolyte. The quantity of electrolyte is calculated in accordance with the porosity and dimensions of the positive electrode and negative electrode, and the porous separator. Finally, the packaged full cell is sealed by a sealing machine.

### 3) Full cell evaluation

Many different full cell evaluation tests are possible. The present invention shows the results for (a) cycle stability, (b) capacity and rate capability, (c) bulging, (d) storage test and (e) DCR resistance tests.
(a) Cycle stability: cells are fully charged and discharged for many hundreds of cycles. The cycling tests are performed at 25°C or at elevated temperature (for example 45°C) to accelerate unwanted side reactions, thus forcing a faster loss of capacity. In the case of water-based coatings we could expect that water exposure might damage the cathode. The damaged cathode could negatively influence the cycle stability at elevated temperature.
(b) Capacity and rate capability: capacity is the discharge capacity measured between 4.3V and 2.7V, at a rate of 0.1C rate. The rate capability is the discharge capacity at a rate of 0.5; 1.0; 2.0; 3.0 and 4.0C, expressed as a percentage of the rate at 0.2C. 0.2C corresponds to the current which discharges a charged cell within 5 hours. 1C, for example, is a current which is 5 times larger than the 0.2C current.
(c) Bulging: pouch cells are fully charged and inserted in an oven which is heated to 90°C and stays at that temperature for several hours. At 90°C the charged cathode reacts with electrolyte and creates gas. The evolved gas creates a bulging. In the Examples we report the values for the thickness increase (= bulging) measured after 4hrs of high temperature exposure. Bulging is a relevant issue for many applications and moreover, the authors expect that bulging is a very sensitive method to detect eventual surface damage due to the water exposure during coating.
(d) Storage test, i.e. remaining and recovered capacity: cells are fully charged and stored for 1 month at 60°C. After 1 month the cell is removed from the 60°C chamber and tested at 25°C. The cell is discharged, during discharge the remaining capacity is measured. After recharge the cell is discharged and the recovered capacity is obtained. After this capacity check the storage at 60°C continues for another month, the remaining and recovered capacity is measured again, then the cell is stored for a third time, and is measured again. Additionally to the relevance for many applications, storage experiments are also a very sensitive tool to evaluate damage of the cathode during water-based coating.
(e) DCR resistance test coupled to storage test: additionally to the capacity measurements after 1, 2 and 3 months of storage at 60°C, the DCR resistance of the cell is measured. The DCR resistance is obtained from the voltage response to current pulses, the procedure used is according to USABC standard (United States Advanced Battery Consortium LLC). The DCR resistance is very relevant for practical application because data can be used to extrapolate fade rates into the future to prognoses battery live, moreover DCR resistance is very sensitive to detect damage to the electrodes, because reaction products of the reaction between electrolyte and anode or cathode precipitate as low conductive surface layers.

In all the experiments so-called NMC532 (NMC with a metal composition M=Ni_{0.5}Mn_{0.3}Co_{0.2}, in Li_{1.03}M_{0.97}O₂) was used as cathode material. NMC532 is a relatively cheap cathode material; it has a medium high base content. NMC 532 has a relatively high capacity, about 170 mAh/g at 4.3V, tested at 0.1C rate. NMC with lower Ni content usually has lower base and therefore allows more easy water-based coating. However, lower base containing cathode materials (like NMC111) also tend to have lower reversible capacity. Therefore NMC532 is a good compromise of low metal cost, feasibility to coat by water-based process and acceptable high capacity. The invention will be illustrated in the following examples.

### Example 1

Example 1 demonstrates how water-based coatings result in many changes compared to normal NMP based coating. The influence of the different steps and chemicals (e.g. influence of CMC binder or effect of water exposure) used during a water-based coating process are shown. This is done by preparing different cathode materials, all originating from the same type of precursor, which is a mass production NMC532 powder. The cathode materials are then coated using the conventional organic NMP based coating process and full pouch cells are assembled. The selection of chemicals, amount of chemicals added as well as process conditions are chosen to simulate a typical water-based coating. Table 1.1 shows the design of experiment.

**Table 1.1: Sample list of water-based binder components coated NMC532**

| Example | Description for product | |
|---|---|---|
| 1A | Reference (NMC532) | NMC |
| 1B | Water washed sample of 1A | NMC+H₂O |
| 1C | FAP (1.0wt%) coated 1A | NMC+H₂O+FAP |
| 1D | CMC (1.0wt%) coated 1A | NMC+ H₂O+CMC |
| 1E | FAP (1.0wt%) & CMC (1.0wt%) coated 1A | NMC+H₂O+CMC+FAP |

### Preparation of the NMC532 samples

### 1A) Preparation of reference NMC532

The reference NMC532 was manufactured on a mass production (MP) line of Umicore (Korea), by the following steps: (a) Blending of lithium and Nickel-Manganese-Cobalt precursors; (b) Synthesizing in an oxidizing atmosphere; and (c) Milling. The detailed explanation of each step is as follows:
Step (a): Blending of lithium and Ni-Mn-Co precursor using a dry powder mixing process. The precursors are put in a vessel. Lithium carbonate and mixed Ni-Mn-Co oxy-hydroxide are used as lithium and Ni-Mn-Co precursors. The precursors are blended in a vertical single-shaft mixer by a dry powder mixing process.
Step (b): sintering in an oxidizing atmosphere. The powder mixture from step (a) is sintered in a tunnel furnace in an oxidizing atmosphere. The sintering temperature is >900°C and the dwell time is -10 hrs. Dry air is used as an oxidizing gas.
Step (c): after sintering, finally, the sample is milled in a grinding machine.

### 1B) Preparation of NMC532 with water exposure

Example 1B is prepared to investigate the influence of water exposure. The water exposure is similar as slurry making followed by drying in the water-based coating process. The powder used for the water exposure is the same MP grade and practically identically to sample 1A.

Example 1B is prepared by the following major steps: (a) Immersing the MP powder sample into water; and (b) Drying.

The detailed explanation of each step is as follows:
Step (a): a MP NMC532 sample of 1.3 kg and 390 ml H₂O are added to a beaker. The mixture is stirred for 1hr using an overhead stirrer at 200 rpm.
Step (b): Drying: the mixture of Lithium Nickel-Manganese-Cobalt oxide and water, in the form of a slurry, is dried in a convection oven at 150°C for 15hrs.

### 1C) Preparation of NMC532 with water exposure and FAP addition

Example 1C is prepared to investigate the influence of water exposure together with an addition of FAP binder. The exposure is related to slurry making followed by drying of the water-based coating process. The powder used is the same MP grade and practically identically to sample 1A.

Example 1C is prepared by the following major steps: (a) Wet mixing of NMC532 (99%) with water-based binder component (1%) and water; (b) Drying; and (c) Grinding.

The detailed explanation of each step is as follows:
Step (a): 2 kg of NMC532 sample is mixed with water (600 ml) and 40.4g of a 50 wt%-in-water binder dispersion of FAP is added. The mixture is stirred for 1hr using an overhead stirrer at 600 rpm.
Step (b): Drying: the slurry is dried in a convection oven for 20hrs at 150°C
Step (c): After drying, finally, the sample is grinded in a grinding machine

### 1D) Preparation of NMC532 with water exposure and CMC addition

Example 1D is prepared to investigate the influence of water exposure together with an addition of CMC (viscosity changing binder additive). The exposure is related to slurry making followed by drying of the water-based coating process. The powder used is the same MP grade and practically identically to sample 1A.

Example 1D is prepared by the following major steps: (a) Wet mixing of NMC532 (99 wt%) with CMC (1 wt%) and water; (b) Drying; and (c) Grinding.

The detailed explanation of each step is as follows:
Step (a): 2kg of NMC532 sample is mixed with water (100 ml) and 1030g of a 2 wt%-CMC-in water solution is added. The mixture is stirred for 1hr using an overhead stirrer at 600 rpm.
Step (b): Drying: the slurry is dried in a convection oven for 20hrs at 150°C
Step (c): After drying, finally, the sample is grinded in a grinding machine.

### 1E) Preparation of NMC532 with water exposure and binder additives CMC and FAP

Example 1E is prepared to investigate the influence of water exposure together with both binder components, FAP and CMC. The exposure is similar as slurry making followed by drying of the water-based coating process. The powder used is the same MP grade and practically identically to sample 1A.

Example 1E is prepared by the following major steps: (a) Wet mixing of NMC532 (98%) with water-based binder component (1+1%) and water; (b) Drying; and (c) Grinding.

The detailed explanation of each step is as follows:
Step (a): 1.3 kg of NMC532 sample is mixed with water (50 ml) and 663g of a 1wt% CMC-in-water solution as well as 26.5g of a 50 wt%FAP-in-water dispersion. The mixture is stirred for 1hr using an overhead stirrer at 140 rpm.
Step (b): Drying: the slurry is dried in convection oven for 20hrs at 150°C
Step (c): After drying, finally, the sample is grinded by a grinding machine.

### Slurry making and coating

A slurry is prepared by mixing 700g of NMC532 of Example 1A (or the exposed samples of Example 1B -1E) with NMP, 7.29g of graphite, 7.29g of super P® (conductive carbon black of Timcal) and 145.8g of 10wt% PVDF based binder in NMP solution. The mixture is mixed for 2.5 hrs in a planetary mixer. During mixing additional NMP is added. The mixture is transferred to a dispersion mixer and mixed for 1.5 hrs under further NMP addition. A typical total amount of NMP used is 230 g. The final solid content in the slurry is about 70wt%.

The slurry is transferred to a coating line. Double coated electrodes are prepared. Electrodes are visually inspected as well as investigated under the microscope. No pinholes are detected, and no evidence for alumina corrosion is detected. The electrode surface is smooth. The electrode loading is 16.1 g/cm². The electrodes are compacted by a roll press to achieve an electrode density of about 3.2 g/cm³. The electrodes are used to prepare pouch cell type full cells as described before.

### Results of full cell testing

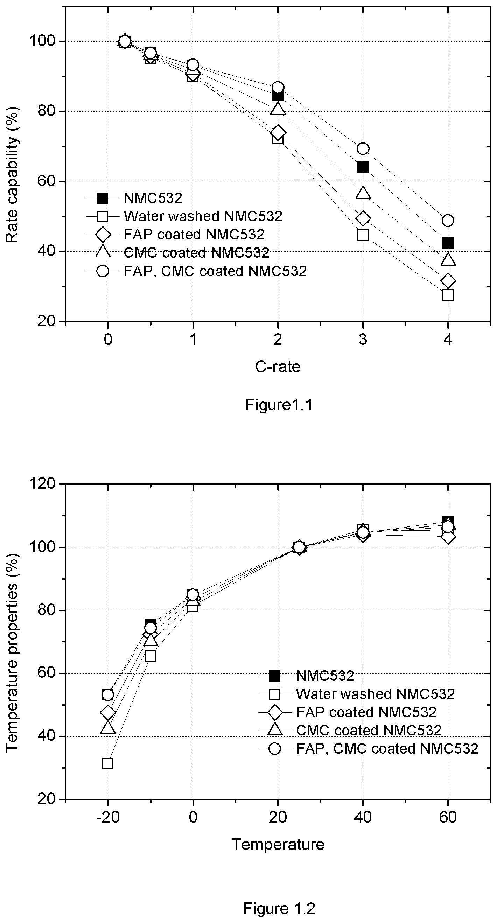

Tables 1.2 to 1.7 list the detailed results of the full cell testing. Figures 1.1 - 1.6 show the data of the tables in figures. Table 1.2 shows results for the reversible capacity and rate performance, tested at 25°C. The reversible capacity is per weight of treated sample, the weight of water-based binder components is included, the weight of carbon additive and PVDF, originating from the NMP based coating is of course excluded. Figure 1.1 summarizes the results of Table1.2.

Table 1.3 shows the temperature properties ranging from performance at -20°C to 60°C. The data in the table are expressed in % obtained capacity after immersing fully charged (at 25°C) cells into a temperature chamber and measuring discharge capacity at 0.5C rate after temperature equilibration. Figure 1.2 summarizes the results of Table 1.3.

Table 1.4 shows results for a bulging test. Fully charged cells are inserted into a pre-heated oven at 90°C and kept at 90°C for 4hrs, after which the thickness is measured and compared to the initial cell thickness.

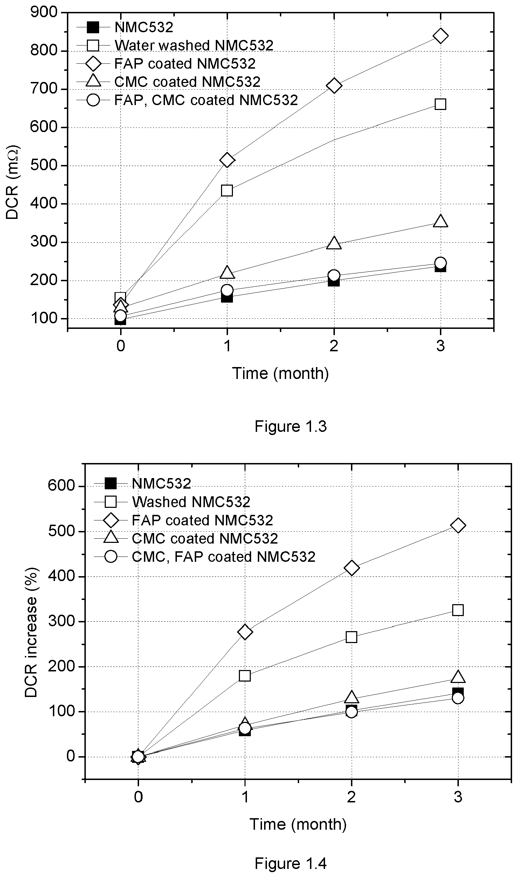

Table 1.5 shows the DCR (DCR = DC resistance). DC resistance is calculated according to USABC procedure for pulse testing. The Pulses are 1C rate for 10 sec. Figures 1.3 and 1.4 summarize the data of Table 1.5.

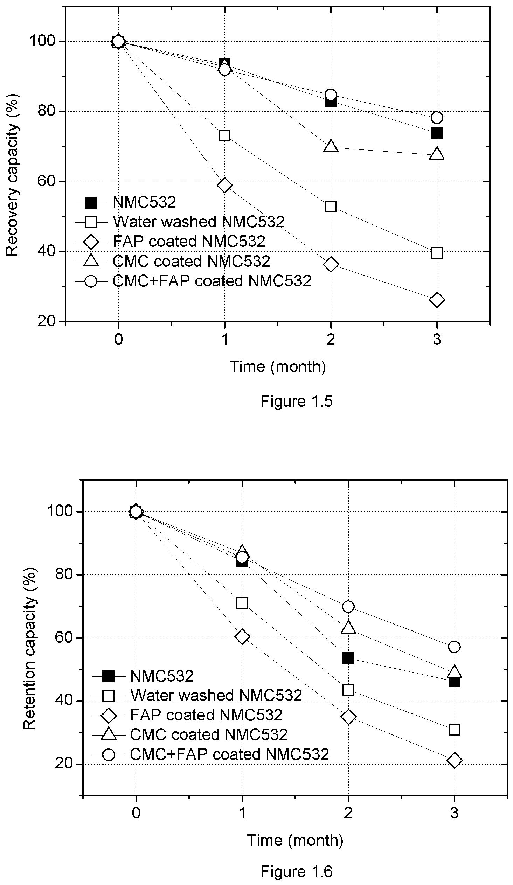

Tables 1.6 and 1.7 show the results of storage at 60°C for 3 months. Table 1.6 shows the recovery capacity. Table 1.7 gives the retention capacity. Two fully charged cells are inserted in a chamber heated at 60°C. After 1 month, the cells are removed, and at 25°C the cells are discharged (delivering the retention capacity) then recharged and discharged, the 2^{nd} discharge yielding the recovered capacity. The charge/discharge cycle is performed at a 1C/1C rate. After this, the cell are charged again, and the storage is continued, and after the 2^{nd} month recovery and retention data are measured. The same is repeated after 3 months. Figure 1.5 and 1.6 summarize the obtained data.

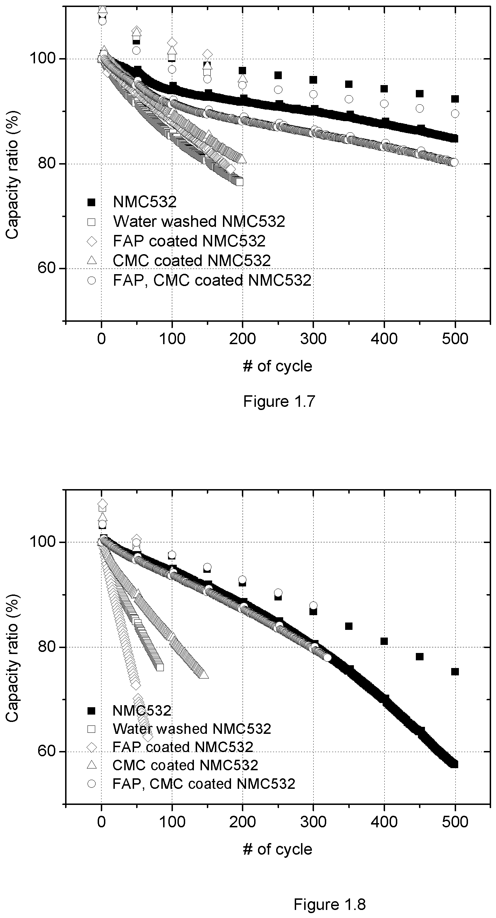

Finally, Figures 1.7 and 1.8 display the cycle stability at 25°C or at 45°C. The figures show the discharge capacity ratio (compared with initial discharge capacity at 1C discharge rate) during cycling at 1C/1C charge/discharge cycling, each 50^{th} cycle is at a slower rate (1C/0.2C charge/discharge).

Clearly, water exposure and addition of chemicals used in a water-based coating change the battery performance. In most cases the performance deteriorates. However, surprisingly, cells with cathodes containing all chemicals needed for water-based coating (1% CMC + 1% FAP, water exposed) show a good overall performance: the capacity and rate performance is roughly similar to the reference, DCR and storage properties compare well, and cycle stability is similar or only slightly worse, even bulging is roughly similar. Example 1 allows to conclude that water-based coatings are possible, and that the chemicals used for water-based coating are compatible with full cells, and finally that the required water exposure does not cause dramatic cell deterioration.

**Table 1.2: Capacity and rate capability results (NMP based binder full cell) of water-based binder coated NMC532**

| Example | Description | Capacity (mAh/g) | Rate capability | | | | | |
|---|---|---|---|---|---|---|---|---|
| | | | 0.2C | 0.5C | 1.0C | 2.0C | 3.0C | 4.0C |
| 1A | Reference | 156.7 | 100.0 | 96.7 | 93.1 | 85.0 | 64.0 | 43.0 |
| 1B | Water washed | 149.3 | 100.0 | 95.4 | 90.1 | 72.0 | 45.0 | 28.0 |
| 1C | FAP coated | 154.2 | 100.0 | 95.8 | 90.8 | 74.0 | 50.0 | 32.0 |
| 1D | CMC coated | 152.9 | 100.0 | 96.1 | 91.9 | 80.0 | 56.0 | 37.0 |
| 1E | FAP, CMC coated | 157.7 | 100.0 | 96.6 | 93.3 | 87.0 | 69.0 | 49.0 |

**Table 1.3: Temperature properties results (NMP based binder full cell) of water-based binder coated NMC532**

| Example | Description | Temperature properties | | | | | |
|---|---|---|---|---|---|---|---|
| | | -20°C | -10°C | 0°C | 25°C | 40°C | 60°C |
| 1A | Reference | 53.4 | 75.5 | 84.9 | 100.0 | 104.7 | 108.1 |
| 1B | Water washed | 31.4 | 65.6 | 81.4 | 100.0 | 105.6 | 105.3 |
| 1C | FAP coated | 47.6 | 72.3 | 83.8 | 100.0 | 104.0 | 103.5 |
| 1D | CMC coated | 42.4 | 70.1 | 82.7 | 100.0 | 104.9 | 107.1 |
| 1E | FAP, CMC coated | 53.2 | 74.3 | 84.9 | 100.0 | 104.7 | 106.5 |

**Table 1.4: Bulging results (NMP based binder full cell) of water-based binder coated NMC532**

| Example | Description | Bulging (%) |
|---|---|---|
| 1A | Reference | 39.1 |
| 1B | Water washed | 50.9 |
| 1C | FAP coated | 47.0 |
| 1D | CMC coated | 56.9 |
| 1E | FAP, CMC coated | 37.1 |

**Table 1.5: DCR, DCR increase (NMP based binder full cell) of water-based binder coated NMC532**

| Example | DCR (mΩ) | | | | DCR increase (%) | | |
|---|---|---|---|---|---|---|---|
| | 0mth | 1mth | 2mths | 3mths | 1mth | 2mths | 3mths |
| 1A | 98.7 | 157.5 | 200.7 | 237.5 | 59.0 | 103.0 | 141.0 |
| 1B | 155.3 | 435.4 | 568.2 | 660.8 | 180.0 | 266.0 | 325.0 |
| 1C | 136.8 | 515.1 | 709.6 | 840.0 | 277.0 | 419.0 | 514.0 |
| 1D | 128.1 | 217.9 | 293.7 | 351.1 | 70.0 | 129.0 | 174.0 |
| 1E | 106.9 | 174.0 | 213.0 | 245.8 | 63.0 | 99.0 | 130.0 |

**Table 1.6: Recovery capacity (NMP based binder full cell) of water-based binder coated NMC532**

| Example | Description | Recovery capacity (%) | | |
|---|---|---|---|---|
| | | 1mth | 2mths | 3mths |
| 1A | Reference | 93.4 | 82.9 | 74.0 |
| 1B | Water washed | 73.2 | 52.9 | 39.7 |
| 1C | FAP coated | 59.0 | 36.5 | 26.3 |
| 1D | CMC coated | 92.8 | 69.8 | 67.6 |
| 1E | FAP, CMC coated | 91.9 | 84.7 | 78.2 |

**Table 1.7: Retention capacity (NMP based binder full cell) of water-based binder coated NMC532**

| Example | Description | Retention capacity (%) | | |
|---|---|---|---|---|
| | | 1month | 2month | 3month |
| 1A | Reference | 84.4 | 53.6 | 46.2 |
| 1B | Water washed | 71.0 | 43.5 | 30.9 |
| 1C | FAP coated | 60.4 | 35.0 | 21.2 |
| 1D | CMC coated | 86.9 | 62.7 | 48.8 |
| 1E | FAP, CMC coated | 85.5 | 69.8 | 57.1 |

### Example 2

This Example will compare the performance of full cells containing positive electrodes which are prepared by a water-based coating process (Example 2B) versus the conventional electrodes originating from a NMP + PVDF based coating process (Example 2A). As in Example 1, NMC532 (NMC with a metal composition M=Ni_{0.5}Mn_{0.3}Co_{0.2}) was used as cathode material, the material of Example 2A being the same as in Example 1A, the material in Example 2B using a powder that is the same MP grade and practically identically to sample 1A. The conventional electrodes are prepared as described in Example 1.

For the water base slurry preparation and electrode coating, a slurry was prepared by mixing 96 wt% of NMC532 powder, 1.5 wt% of Super-P and 1 wt% of Graphite as a conductive agent, 0.7 wt% of Carboxymethyl Cellulose (CMC) and 1 wt% of Fluorine Acrylate polymer (FAP) as a water-based binder to the mixture. This mixing procedure is divided into two steps; the first step is slow speed mixing using a planetary mixing machine for about 2.5hrs. The speed of the first mixing step is about 100rpm. The second step is high speed mixing, using a dispersion mixing machine for about 1hr. The speed of the second mixing step is about 4000rpm.

The prepared slurry is coated in a coating machine on aluminum foil. The electrode is made with a fixed loading weight, length and width. The coating temperature was 60°C (in the machine). After coating, the electrode is pressed with a pressing machine obtaining an electrode density of 3.2g/cm³. The prepared electrode is dried at 85°C for 8 hrs in a vacuum oven.

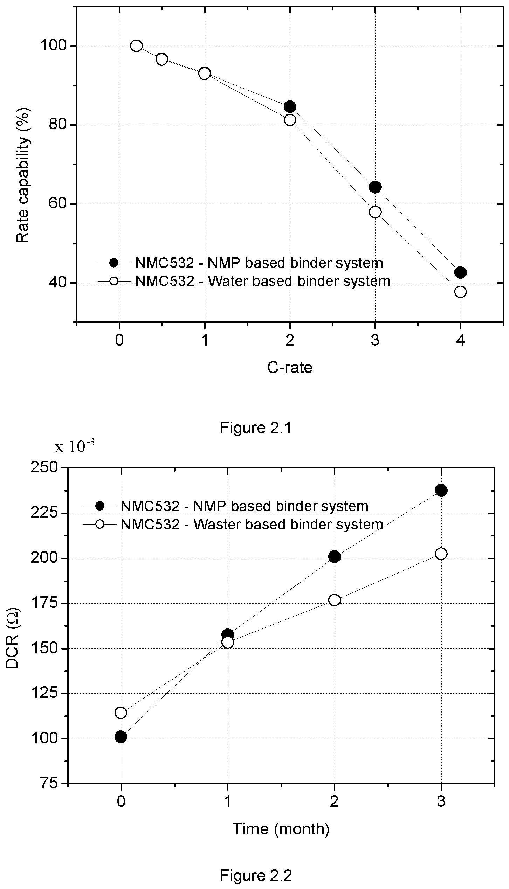

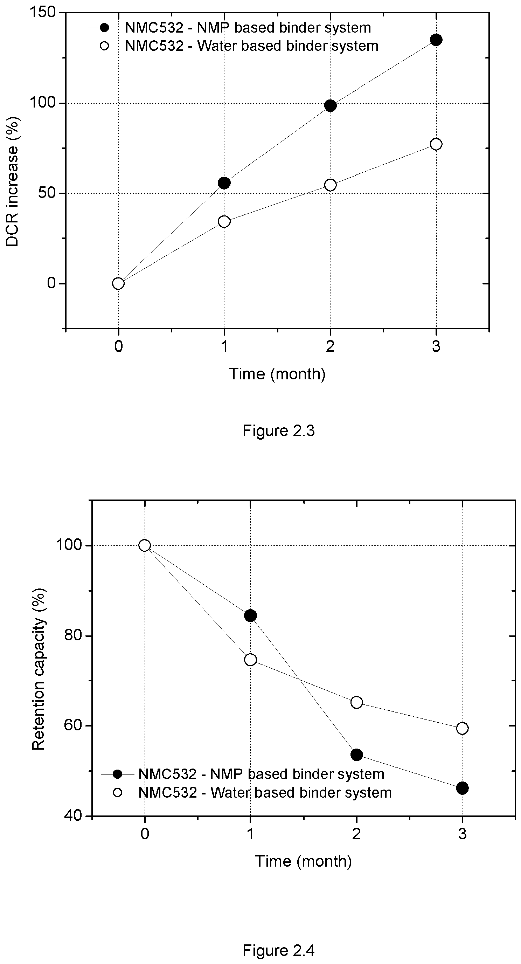

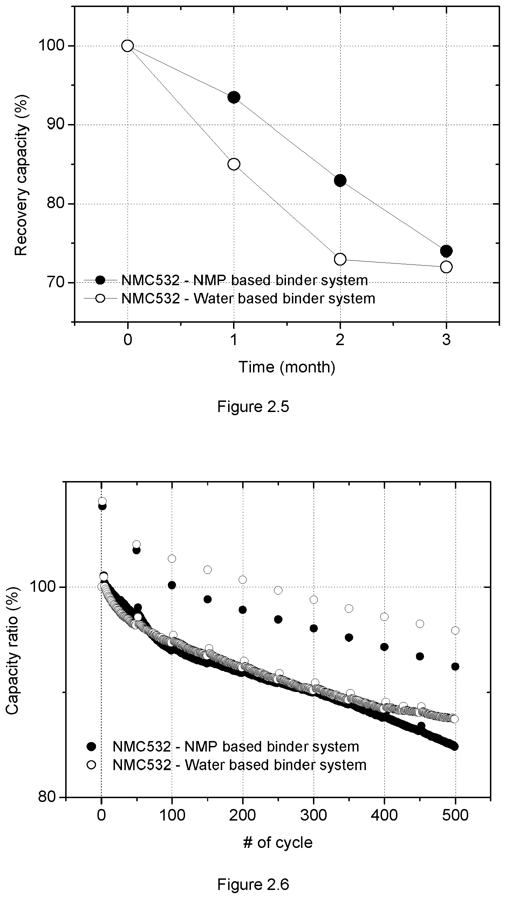

Electrochemical testing: Tables 2.1 - 2.4 summarize the results of the electrochemical cell properties. Figures 2.1 - 2.7 shows the data of the tables.

Table 2.1 and Figure 2.1 show the results for the reversible capacity and rate performance, tested at 25°C. NMC532 has a similar capacity in the NMP based binder system and the water-based binder system.

Table 2.2 shows the DCR (DCR = DC resistance). DC resistance is calculated according to USABC procedure for pulse testing. The Pulses are 1C rate for 10 sec. Figures 2.2 and 2.3 summarize the data of Table 2.

Table 2.3 and 2.4 show the results of storage at 60°C for 3 months. Table 2.3 shows the recovery capacity, Table 2.4 gives the retention capacity. The test protocol is the same as in Example 1.

During the high temperature storage test, DCR and DCR increase of NMC532 in the water-based binder system is better than that of NMC532 in the organic NMP based binder system. For retention capacity and recovery capacity, the NMC532 sample in the water-based binder system has results comparable to the NMC532 in the NMP based binder system.

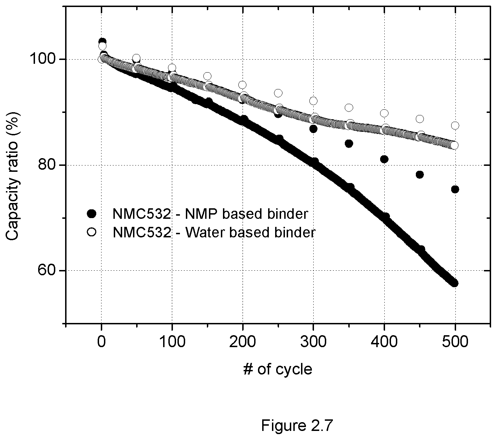

Finally, Figures 2.6 and 2.7 display the cycle stability at 25°C and at 45°C respectively. The figures show the discharge capacity ratio (compared with initial discharge capacity at 1C discharge rate) during cycling at 1C/1C charge discharge cycling, each 50^{th} cycle is at slower rate (1C/0.2C charge/discharge). The cycle stability at room temperature of the cells with water-based electrodes is slightly better compared to the NMP based binder system. At elevated T (45°C) cells with water-based coated electrodes show a clearly better result. It can be summarized that water-based coating technology can be applied for NMC compounds for automotive applications. For the NMC532 product, the water-based binder system has a slightly lower, but still acceptable rate performance. Water-based coatings show an advantage over conventional coatings for high temperature storage tests (DCR, DCR increase) and cycle stability, especially at the elevated temperature of 45 °C

**Table 2.1: Capacity and rate capability of NMC532 in NMP based binder system and water-based binder system**

| Example | Description | Capacity (mAh/g) | Rate capability (%) | | | | | |
|---|---|---|---|---|---|---|---|---|
| | | | 0.2C | 0.5C | 1.0C | 2.0C | 3.0C | 4.0C |
| 2A | NMP (PVDF) binder system | 156.7 | 100.0 | 96.7 | 93.1 | 84.6 | 64.2 | 42.6 |
| 2B | Water-based binder system | 157.3 | 100.0 | 96.5 | 92.9 | 81.2 | 57.9 | 37.7 |

**Table 2.2: DCR, DCR increase of NMC532 in NMP based binder system and water-based binder system**

| Example | Description | DCR (mΩ) | | | | DCR increase (%) | | |
|---|---|---|---|---|---|---|---|---|
| | | 0month | 1month | 2month | 3month | 1month | 2month | 3month |
| 2A | NMP (PVDF) binder system | 101.1 | 157.4 | 200.7 | 237.5 | 55.7 | 98.5 | 135.0 |
| 2B | Water-based binder system | 114.2 | 153.3 | 176.6 | 202.3 | 34.3 | 54.6 | 77.2 |

**Table 2.3: Retention capacity of NMC532 in NMP based binder system and water-based binder system**

| Example | Description | Retention capacity (%) | | |
|---|---|---|---|---|
| | | 1month | 2month | 3month |
| 2A | NMP (PVDF) binder system | 84.4 | 53.6 | 46.2 |
| 2B | Water-based binder system | 74.6 | 65.2 | 59.5 |

**Table 2.4: Recovery capacity of NMC532 in NMP based binder system and water-based binder system**

| Example | Description | Recovery capacity (%) | | |
|---|---|---|---|---|
| | | 1month | 2month | 3month |
| 2A | NMP (PVDF) binder system | 93.4 | 82.9 | 74.0 |
| 2B | Water-based binder system | 85.0 | 72.9 | 72.0 |

### Example 3

In this Example the water-based preparation of Example 2B (=3B1) is repeated to check for reproducibility. The example compares results of a second full cell lot 3B2 with that of 3B1. The example demonstrates that the results of Example 2 are reproducible. Additional properties like bulging or low temperature performance are measured. Tables 3.1 - 3.6 summarize the results of the tests. Figures 3.1-3.8 shows the data of the tables. For Figures 3.1-3.7 the following references are used:

| Example | Reference used in Figures 3.1-3.7 |
|---|---|
| 3A=1A | AL521 |
| 3B1 | AL634 |
| 3B2 | AL777 |

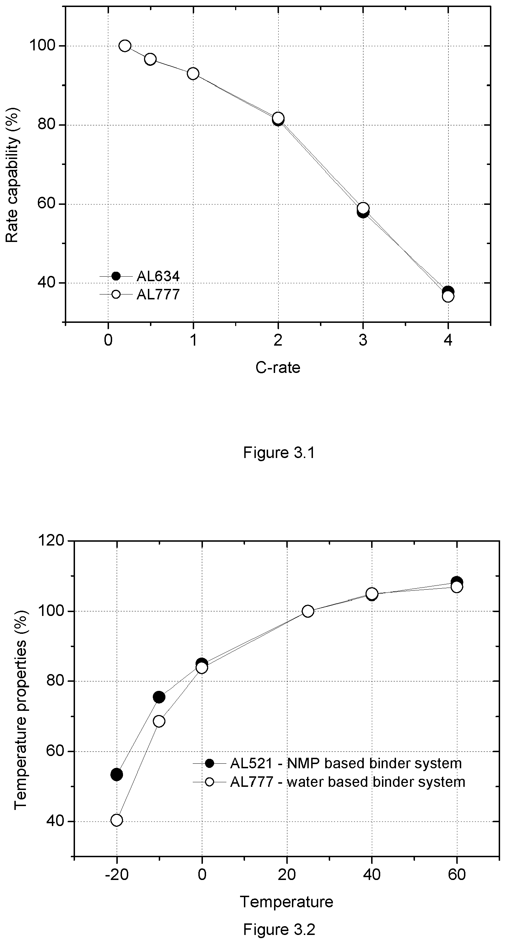

Table 3.1 shows results for the reversible capacity and rate performance, tested at 25°C. Figure 3.1 summarizes the results of table 1. Example 3B2 shows similar capacity as Example 3B1.

Tables 3.2 and 3.3 compare full cells containing positive electrodes which are prepared by a water-based coating process (Example 3B2) versus the conventional electrodes originating from a NMP + PVDF based coating process (Example 3A, which is the same material as Example 1A). Table 3.2 shows the temperature properties ranging from performance at -20°C to 60°C. The data in the table are expressed in % obtained capacity after immersing the fully charged (at 25°C) cells into a temperature chamber and measuring the discharge capacity at 0.5C rate, after temperature equilibration. Figure 3.2 summarizes the results of Table 3.2. It is clear that cells with water-based cathodes cannot match the low temperature properties of cells with a NMP based binder system, even though the results are not unacceptable. Table 3.3 shows results for a bulging test. Fully charged cells are inserted into a pre-heated oven at 90°C, are kept at 90°C for 4hrs, at that time the thickness is measured and compared with the initial cell thickness. Bulging properties of NMC532 in water-based binder system (Ex 3B2) are worse than that of NMC532 in NMP based binder system (Ex 3A).

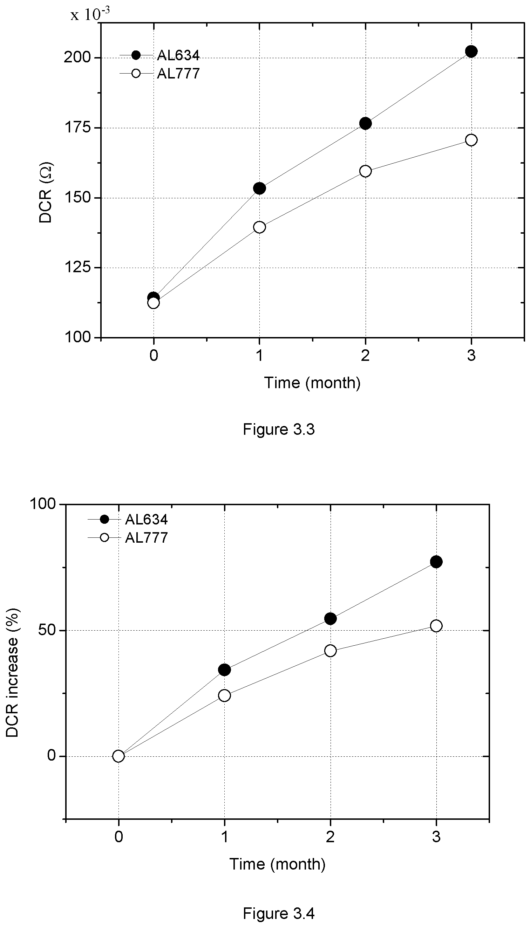

Table 3.4 shows the DCR (DCR = DC resistance). DC resistance is calculated according to USABC procedure for pulse testing. The Pulses are 1C rate for 10 sec. Figures 3.3 and 3.4 summarize the data of Table 3.4.

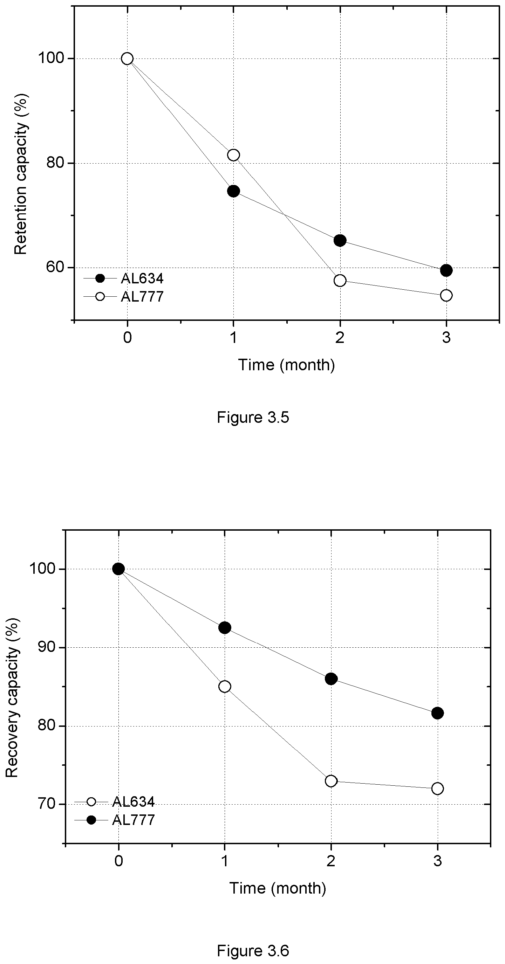

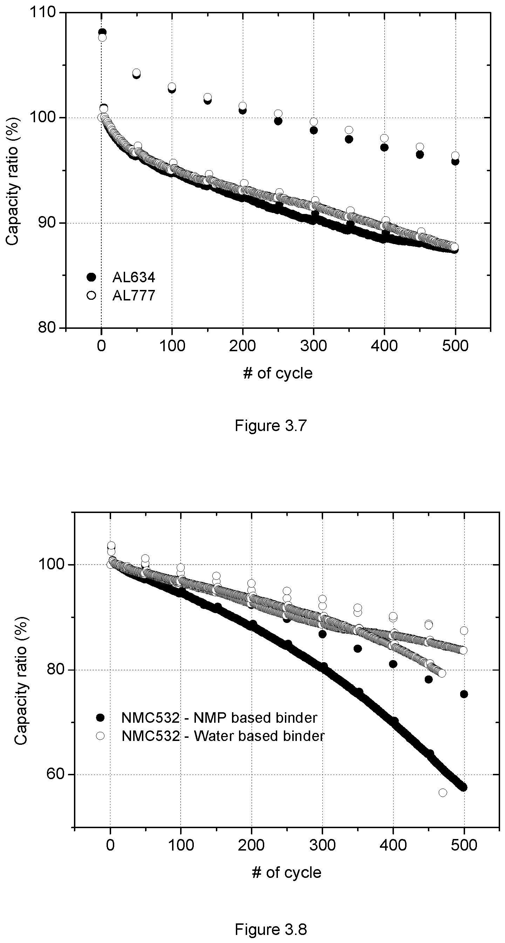

Tables 3.5 and 3.6 show the results of storage at 60°C for 3 months. Table 3.5 shows the retention capacity, table 3.6 gives the recovery capacity. Figures 3.5 and 3.6 summarize the obtained data. Example 3B2 gives similar or slightly improved results compared with Example 3B1. Finally, Figures 3.7 and 3.8 display cycle stability at 25°C or at 45°C. The protocol is the same as in Example 2, and the results are reproducible.

It can be summarized that water-based coating technology can be applied and gives reproducible results. Example 3B2 confirms the results of Example 3B1. Particularly Example 3B2 confirms that water-based coating shows lower DCR, good storage properties and good cycle live, although the rate performance is poor. It can also be concluded that to apply water-based coating especially bulging, rate performance as well as low T performance should still be improved.

**Table 3.1: Capacity and rate capability of NMC532 in NMP based binder system and water-based binder system**

| Example | Description | Capacity (mAh/g) | Rate capability (%) | | | | | |
|---|---|---|---|---|---|---|---|---|
| | | | 0.2C | 0.5C | 1.0C | 2.0C | 3.0C | 4.0C |
| 3B1 | Water-based binder system | 157.3 | 100.0 | 96.5 | 92.9 | 81.2 | 57.9 | 37.7 |
| 3B2 | | 156.1 | 100.0 | 96.6 | 92.9 | 81.7 | 58.9 | 36.5 |

**Table 3.2: Temperature properties of NMC532 in NMP based binder system and water-based binder system**

| Example | Description | Temperature properties | | | | | |
|---|---|---|---|---|---|---|---|
| | | -20°C | -10°C | 0°C | 25°C | 40°C | 60°C |
| 3A=1A | NMP (PVDF) binder system | 53.4 | 75.5 | 84.9 | 100.0 | 104.7 | 108.1 |
| 3B2 | Water-based binder system | 40.4 | 68.6 | 83.8 | 100.0 | 104.9 | 106.8 |

**Table 3.3: Bulging properties of NMC532 in NMP based binder system and water-based binder system**

| Example | Description | Bulging (%) |
|---|---|---|
| 3A=1A | NMP (PVDF) binder system | 39.1 |
| 3B2 | Water-based binder system | 69.3 |

**Table 3.4: DCR, DCR increase of NMC532 in NMP based binder system and water-based binder system**

| Example | Description | DCR (mΩ) | | | | DCR increase (%) | | |
|---|---|---|---|---|---|---|---|---|
| | | 0month | 1month | 2month | 3month | 1month | 2month | 3month |
| 3B1 | Water-based binder system | 114.2 | 153.3 | 176.6 | 202.3 | 34.3 | 54.6 | 77.2 |
| 3B2 | | 112.4 | 139.5 | 159.5 | 170.7 | 24.1 | 41.9 | 51.8 |

**Table 3.5: Retention capacity of NMC532 in NMP based binder system and water-based binder system**

| Example | Description | Retention capacity (%) | | |
|---|---|---|---|---|
| | | 1month | 2month | 3month |
| 3B1 | Water-based binder system | 74.6 | 65.2 | 59.5 |
| 3B2 | | 81.5 | 57.6 | 54.7 |

**Table 3.6: Recovery capacity of NMC532 in NMP based binder system and water-based binder system**

| Example | Description | Recovery capacity (%) | | |
|---|---|---|---|---|
| | | 1month | 2month | 3month |
| 3B1 | Water-based binder system | 85.0 | 72.9 | 72.0 |
| 3B2 | | 92.5 | 86.0 | 81.6 |

### Example 4

This Example discloses the preparation of a double shell coated NMC, as described in WO2011/054440. The double shell coated NMC has an inner shell consisting of LiF. The LiF is the result of a reaction of a fluorinated polymer with the soluble base present on the surface of the uncoated material. Due to the consumption of this surface base the total base content (as measured by pH titration) is lowered. The lower base content should cause lower bulging than uncoated NMC. The outer shell is a hydrophobic polymer. During water-based slurry making the outer polymer shell protects at least parts of the NMC surface from water exposure. After battery assembly the hydrophobic polymer swells in electrolyte, and the surface becomes ion conductive.

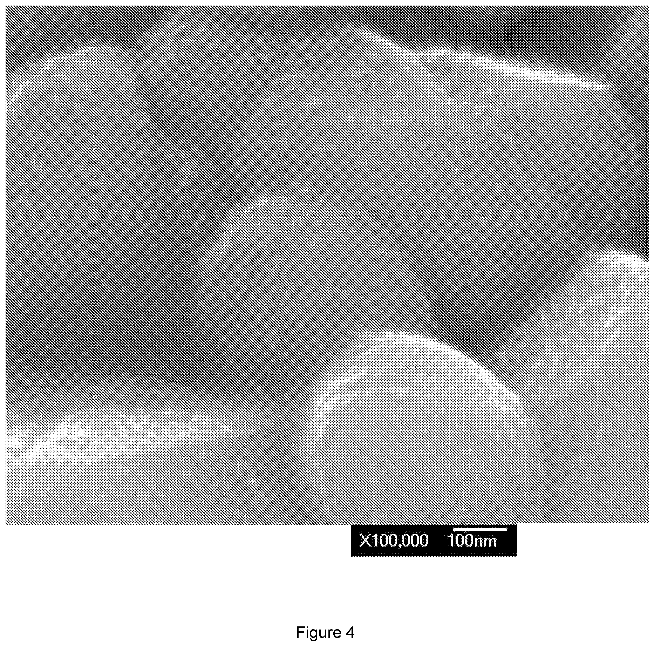

The double shell NMC532 in the Examples is prepared by the following major steps: (a) blending of lithium Ni-Mn-Co oxide and fluorine containing polymer precursor; and (b) firing in an oxidizing atmosphere. The detailed explanation of each step is as follows:
Step (a): Blending of lithium Ni-Mn-Co oxide and fluorine precursor using a dry powder mixing process. The precursors are put in a vessel. 1 wt% of fine powdery PVDF-HFP (= poly(vinylidene fluoride-co-hexafluoropropene)) co-polymer is used as fluorinated polymer precursor. The lithium Ni-Mn-Co oxide and the fluorine precursor are blended in a vertical single-shaft mixer by a dry powder mixing process.
Step (b): sintering in an oxidizing atmosphere. The double shell NMC532 sample is fired by using the blend from step (a) in a chamber furnace or channel furnace in an oxidizing atmosphere. In this Example the sintering temperature is 250°C and the dwell time is 5 hrs. The firing occurs in a flow of dry air which is used as an oxidizing gas. Figure 4 shows the FESEM micrograph of Li Ni-Mn-Co oxide /1% PVDF mixture heated at 250°C.

Two samples (4B & 4D) are prepared according to step (a) and (b) from two different NMC532 precursor samples (4A & 4C). 4A is a precursor sample being a mass production material nearly identical to Example 1A, 4C is a NMC532 sample from a pilot line and has a higher soluble base content than the normal mass production. Table 4.1 summarizes the sample history. Soluble base is measured by pH titration. To measure the pH, 7.5g of sample are immersed in 100 ml of water. Under stirring the surface impurities such as Li₂CO₃ and LiOH dissolve. Additionally an ion exchange reaction replacing Li+ (in the solid) for H+ (in the water) takes place. After 10 min stirring a clear liquid is obtained by filtering. The base content in this liquid is obtained by pH titration until pH=4.5. Values are reported as µmol/g of cathode material. Comparing the total base after double shell coating with the value before coating confirms a reduction of soluble base content by 22- 25%.

**Table 4.1:**

| Sample ID | Description | Origin of sample precursor | Soluble base content, µmol/g | Reduction of soluble base |
|---|---|---|---|---|
| 4A | Normal base NMC532 | Mass production | 68.4 | |
| 4B | Double shell coated NMC531 | 4A | 52.0 | 24.0% |
| 4C | Increased base NMC532 | Pilot plant | 73.9 | |
| 4D | Double shell coated higher base NMC531 | 4C | 57.3 | 22.5% |

### Example 5

Example 5 shows that a double shell coating causes less pH recovery. NMC with a higher Ni content has higher capacity but also a higher content of soluble base. The soluble base causes serious problems because it severely corrodes the aluminum current collector foil. The on-set of aluminum foil corrosion can easily be detected by the observation of pin holes. These pin holes originate from hydrogen gas evolution when the still wet, warm, and as drying proceeds increasingly basic coating layer attacks the aluminum foil.

To prevent the aluminum corrosion the pH of the coating slurry is reduced by acid addition. In this example typically 0.05 wt% of H₂SO₄ (in wt% of active NMC) was added to reduce the pH.

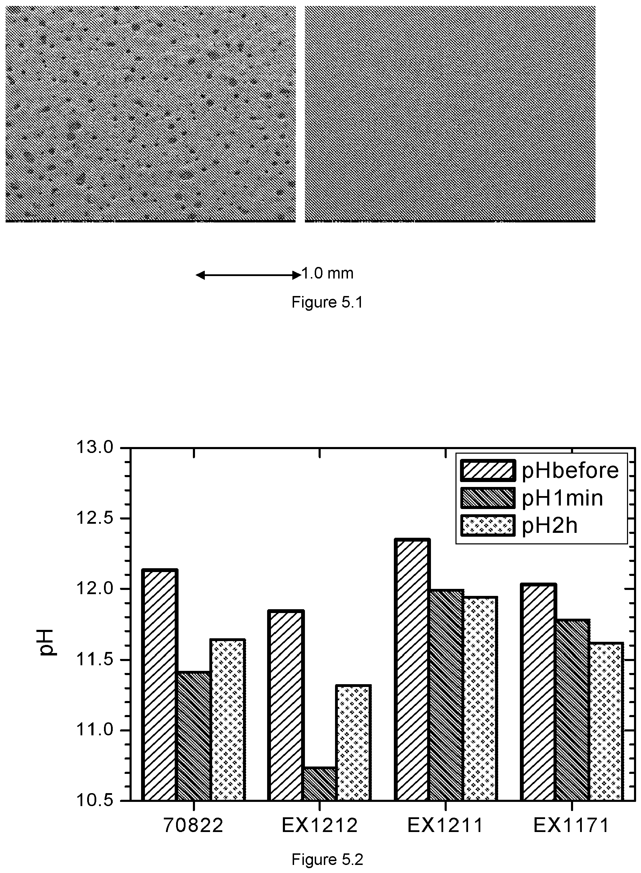

To illustrate this mass production NMC532 such as in Example 1A was used for slurry making. A water-based slurry was prepared similar as in Example 2 with the exception that no sulfuric acid was added. After coating the electrodes were visually inspected. Additionally the electrodes were inspected by SEM microscopy (not compacted by roll pressing) - see Figure 5.1, left picture. The electrode shows damage - pin holes appear. Pin holes originate from hydrogen evolution after base attack to aluminum. In some cases damage to the alumina foil can be detected. Apparently aluminum corrosion happened. SEM micrographs of coated electrodes, Figure 5.1, right picture shows the result of the acid addition: Al corrosion is avoided, there are no pin holes, and the electrode surface is smooth.

A significant problem is the pH recovery. Immediately after acid addition the pH reduces, but then it gradually recovers due to ion exchange reactions between the water and the outer surface of the bulk. The recovery is highly unwanted because the changing pH changes slurry properties during the coating process, thus causing process stability issues at mass production, and ultimately it will cause aluminum corrosion.

In this example the pH recovery after adding acid to NMC532 and to double shell coated NMC532 is investigated. 150g of Sample is immersed into 75 ml of water. The pH is recorded each 3 sec. The pH stabilizes and after 13 min. 1.42 ml of 10% H₂SO₄ (1 vol concentrated H₂SO₄ diluted by water to give 10 volumes) g of acid is added. The pH drops immediately, then it recovers continuously. 2 sets of samples were investigated. Table 5.1 summarizes the samples and results. Figure 5.2 shows results in details. 5A is the reference MNC532 and is equal to 4A. 5B is the same material after double shell coating, and is the same as 4B. 5C (=4C) is a NMC532 reference with higher base content and 5D (=4D) is the double shell coated material of the NMC532 with higher base content. We observe that double shell coated NMC532 generally has a lower pH than the uncoated reference. As expected, high base NMC (5C) has high pH before acid addition and the recovered pH is also high. When using high base NMC after double shell coating, the same amount of acid causes a significantly lower pH (see 5D).

It can be concluded that the application of double shell coated NMC allows to reduce the aluminum corrosion, and in this way water-based coating technology can be "pushed" towards NMC with higher capacity; as typically the higher capacity is accompanied by a higher base content.

**Table 5.1: sample summary**

| Sample | reference on Fig. 5.2 | | Soluble base content µmol/g | pH before acid addition | pH 1 min after acid addition | pH 2 hrs after acid addition |
|---|---|---|---|---|---|---|
| 5A | 70822 | Normal base NMC532 | 68.4 | 12.134 | 11.414 | 11.641 |
| 5B | EX1212 | Double shell coated NMC532 | 52.0 | 11.844 | 10.734 | 11.320 |
| 5C | EX1211 | Increased base NMC532 | 73.9 | 12.350 | 11.991 | 11.943 |
| 5D | EX1171 | Double shell coated higher base NMC532 | 57.3 | 12.032 | 11.779 | 11.618 |

### Example 6

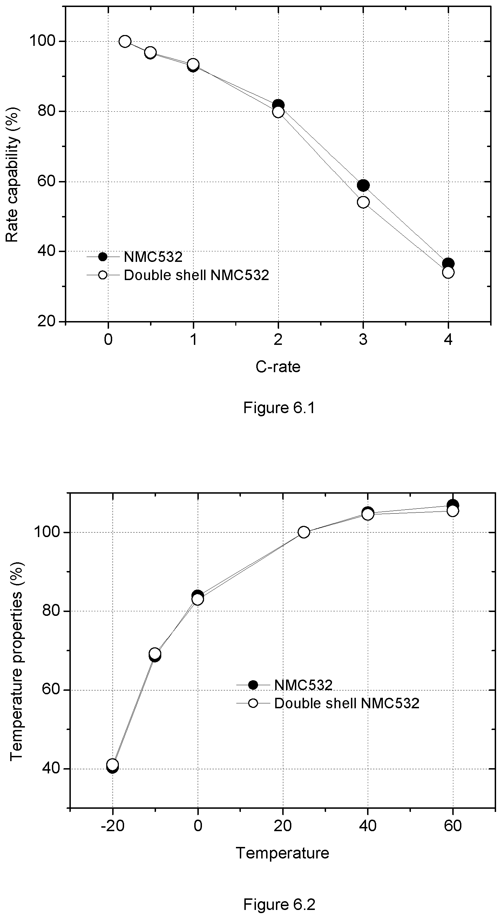

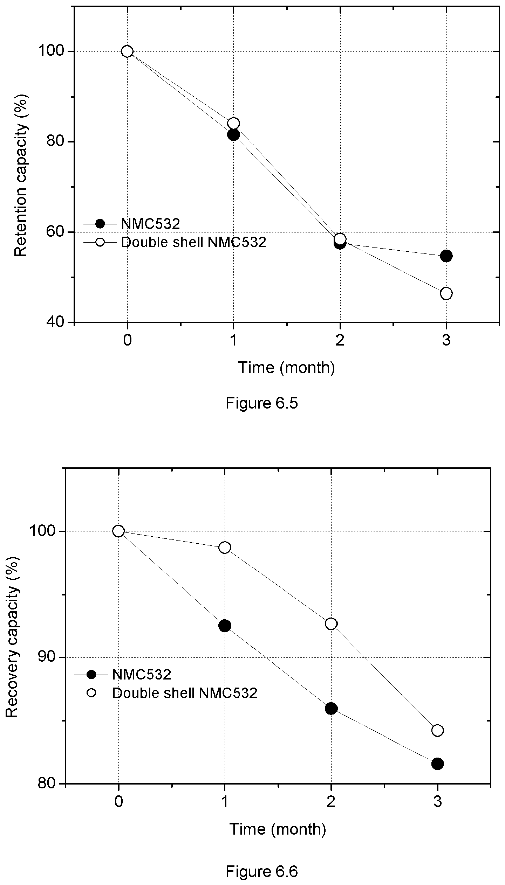

This Example shows a comparison of double shell coated NMC and reference NMC in water-based binder system. Normal NMC as well as double shell coated NMC are tested as cathode material in wound pouch type full cells. The positive electrodes in these cells are obtained by the water-based coating technology. This example compares the performance of the double shell coated NMC with that of the reference. In this example the reference sample also was the precursor for the double shell coating process. Example 6A is the reference, and is the same material as in Example 3B2. Expressed in a simplified way, the core of the reference NMC and of the double shell coated NMC is the same. Table 6.1 gives the overview of the used samples. The electrochemical test results are summarized in Tables 6.2 to 6.7 (Tables 6.2&6.3: the coating type is the water-based binder system). Figure 6.1 to 6.8 display the data of the tables.

**Table 6.1: Information about full cell lots prepared from water-based coated electrodes**

| Example | Product Type | Coating type |
|---|---|---|
| 6A (=3B2) | NMC532 | Water-based binder system |
| 6B | Double shell coated NMC532 | |

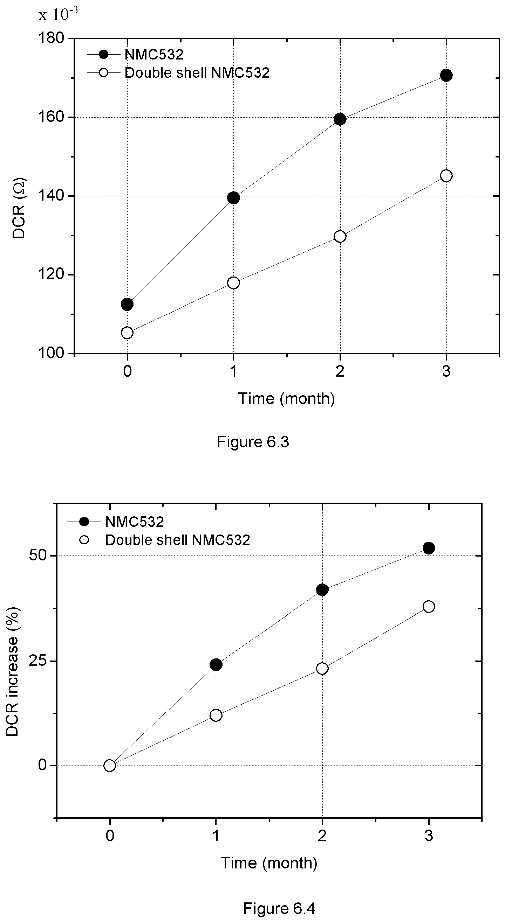

Table 6.2 and Figure 6.1 show capacity and rate performance results. Table 6.3 and Figure 6.2 show temperature properties. The double shell NMC532 has a slightly lower capacity and lower rate capability than the NMC532 reference sample in the water-based binder system full cell test. The double shell NMC532 and reference NMC532 have similar temperature properties in water-based binder system full cell test. The slight loss of capacity and slightly lower rate performance can be explained by the presence of the double shell, which does not contribute to the reversible capacity and acts as an additional resistive layer. Table 6.4 shows results of the bulging test. The performance of the double shell coated NMC is similar to that of the reference. Table 6.5 and Figures 6.3 and 6.4 show the initial DCR and the DCR increase rate during storage. Double shell coated NMC shows an excellent performance. The double shell coated NMC has (a) a lower initial DCR and (b) a much lower increase rate.

Tables 6.6 and 6.7 and Figure 6.5 show the performance after storage. The double shell coated NMC shows excellent storage properties; it has the highest retention of recovered capacity.

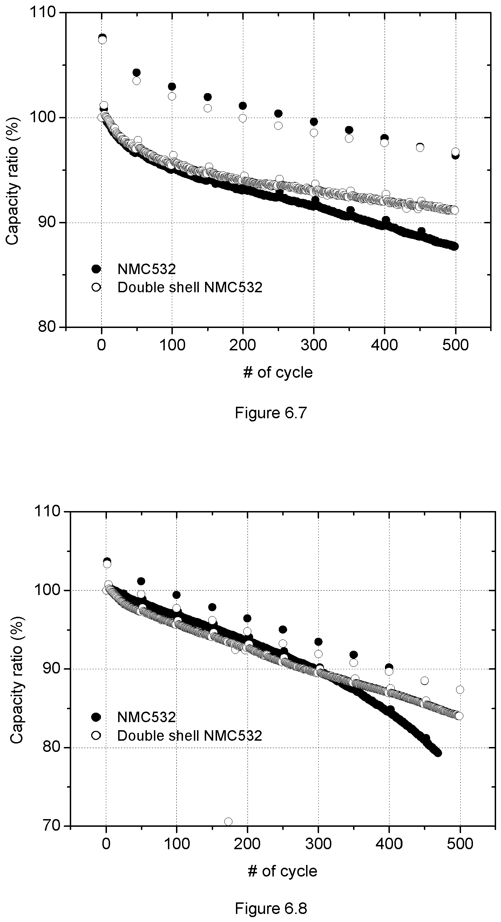

Finally, Figures 6.7 and 6.8 show the results for cycle stability. At 25°C double shell coated NMC shows significantly improved cycle stability, also at 45°C the double shell coated NMC has better performance compared to the result for the NMC reference.

It can be summarized that double shell coated NMC, when applied by water-based coating technology, generally shows similar, slightly better or significant improved performance compared with the NMC reference. Especially important for automotive applications which require high pulse power is the decrease of DCR as well the reduction of DCR increase during operation. Since automotive batteries need to last a long time a high cycle stability as well as a stable recovered capacity during storage is required. Clearly double shell coated NMC532, compared with non-coated NMC532 shows lower DCR, less DCR increase, less loss of recovered capacity and significantly improved cycle stability. This makes the current invention especially suitable for automotive applications.

**Table 6.2: Capacity and rate capability results (Water-based binder full cell) of NMC532 and double shell NMC532**

| Example | Product Type | Capacity (mAh/g) | Rate capability (%) | | | | | |
|---|---|---|---|---|---|---|---|---|
| | | | 0.2C | 0.5C | 1.0C | 2.0C | 3.0C | 4.0C |
| 6A | NMC532 | 156.1 | 100.0 | 96.6 | 92.9 | 81.7 | 58.9 | 36.5 |
| 6B | Double shell NMC532 | 154.3 | 100.0 | 96.8 | 93.4 | 79.8 | 54.1 | 34.0 |

**Table 6.3: Temperature properties (Water-based binder full cell) of NMC532 and double shell NMC532**

| Example | Product Type | Temperature properties | | | | | |
|---|---|---|---|---|---|---|---|
| | | -20°C | -10°C | 0°C | 25°C | 40°C | 60°C |
| 6A | NMC532 | 40.4 | 68.6 | 83.8 | 100.0 | 104.9 | 106.8 |
| 6B | Double shell NMC532 | 41.0 | 69.2 | 82.9 | 100.0 | 104.5 | 105.4 |

**Table 6.4: Bulging properties (Water-based binder full cell) of NMC532 and double shell NMC532**

| Example | Product Type | Bulging (%) |
|---|---|---|
| 6A | NMC532 | 69.3 |
| 6B | Double shell NMC532 | 68.3 |

**Table 6.5: DCR, DCR increase (Water-based binder full cell) of NMC532 and double shell NMC532**

| Example | Product Type | DCR (mΩ) | | | | DCR increase (%) | | |
|---|---|---|---|---|---|---|---|---|
| | | 0month | 1month | 2month | 3month | 1month | 2month | 3month |
| 6A | NMC532 | 112.4 | 139.5 | 159.5 | 170.7 | 24.1 | 41.9 | 51.8 |
| 6B | Double shell NMC532 | 105.3 | 117.9 | 129.7 | 145.1 | 12.0 | 23.2 | 37.9 |

**Table 6.6: Retention capacity (Water-based binder full cell) of NMC532 and double shell NMC532**

| Example | Product Type | Retention capacity (%) | | |
|---|---|---|---|---|
| | | 1month | 2month | 3month |
| 6A | NMC532 | 81.5 | 57.6 | 54.7 |
| 6B | Double shell NMC532 | 84.0 | 58.5 | 46.4 |

**Table 6.7: Recovery capacity (Water-based binder full cell) of NMC532 and double shell NMC532**

| Example | Product Type | Recovery capacity (%) | | |
|---|---|---|---|---|
| | | 1month | 2month | 3month |
| 6A | NMC532 | 92.5 | 86.0 | 81.6 |
| 6B | Double shell NMC532 | 98.7 | 92.7 | 84.2 |

## Claims

1. A water-based lithium ion battery cathode slurry comprising a conductive agent and/or a water-based binder and comprising a cathode active material comprising a lithium transition metal oxide powder wherein the lithium transition metal oxide powder consists of agglomerates of primary particles, the primary particles comprising a coating layer comprising a polymer, wherein the polymer is a fluorine-containing polymer comprising at least 50 wt% of fluorine, wherein the coating layer comprises a first inner and a second outer coating layer, the second outer layer comprising the fluorine-containing polymer, and the first inner layer consisting of a reaction product of the fluorine-containing polymer and the surface of the primary particles.

2. The water-based lithium ion battery cathode slurry of claim 1, wherein the coating layer is hydrophobic.

3. The water-based lithium ion battery cathode slurry of claim 1 or 2, wherein the reaction product comprises LiF.

4. The water-based lithium ion battery cathode slurry of claim 3, wherein the lithium in LiF originates from the primary particles surface.

5. The water-based lithium ion battery cathode slurry of claims 3 or 4, wherein the fluorine in the reaction product comprising LiF originates from partially decomposed fluorine-containing polymer present in the second outer layer.

6. The water-based lithium ion battery cathode slurry of any one of claims 1 to 4, wherein the first inner coating layer consists of a LiF film with a thickness of at least 0.5 nm.

7. The water-based lithium ion battery cathode slurry of any one of claims 1 to 6, wherein the lithium transition metal oxide has the general formula Li₁₊ₐM₁₋ₐO_{2±b} M^{'}ₖSₘ with -0.03<a<0.06, b<0.02, wherein M =NiₓMn_{y}Co_{z}, with x>0, y>0, z>0 ; x+y+z=1; and x/y ≥ 1 and wherein M' consists of either one or more elements of the group Ca, Sr, Y, La, Ce and Zr, with 0≤k≤0.1, k being expressed in wt%; and 0≤m≤0.6, m being expressed in mol%.

8. The water-based lithium ion battery cathode slurry of claim 7, wherein 0.33≤x≤0.7, and 0.1<z<0.35.

9. The water-based lithium ion battery cathode slurry of claim 7, wherein 0.4≤x≤0.6, and x/y>1.

10. The water-based lithium ion battery cathode slurry of claim 1, wherein the fluorine-containing polymer is either one of PVDF, PVDF-HFP or PTFE.

11. The water-based lithium ion battery cathode slurry of any of the previous claims comprising a conductive agent and a water-based binder.

12. Use of the water-based lithium ion battery cathode slurry of any one of claims 1 to 6, in the manufacturing of a cathode for a lithium ion battery, wherein the cathode comprises an aluminum substrate.

13. Use of the water-based lithium ion battery cathode slurry of any one of claims 1 to 6, in the manufacturing of an automotive lithium ion battery.

## Patentansprüche

1. Lithiumionenbatterie-Kathodenaufschlämmung auf Wasserbasis, umfassend ein leitfähiges Mittel und/oder ein Bindemittel auf Wasserbasis und umfassend ein kathodenaktives Material, umfassend ein Lithiumübergangsmetalloxidpulver, wobei das Lithiumübergangsmetalloxidpulver aus Agglomeraten von Primärpartikeln besteht, wobei die Primärpartikel eine Überzugsschicht umfassen, die ein Polymer umfasst, wobei das Polymer ein fluorhaltiges Polymer ist, das mindestens 50 Gew.-% Fluor umfasst, wobei die Überzugsschicht eine erste innere und eine zweite äußere Überzugsschicht umfasst, wobei die zweite äußere Schicht das fluorhaltige Polymer umfasst und die erste innere Schicht aus einem Reaktionsprodukt des fluorhaltigen Polymers und der Oberfläche der Primärteilchen besteht.

2. Lithiumionenbatterie-Kathodenaufschlämmung auf Wasserbasis nach Anspruch 1, wobei die Überzugsschicht hydrophob ist.

3. Lithiumionenbatterie-Kathodenaufschlämmung auf Wasserbasis nach Anspruch 1 oder 2, wobei das Reaktionsprodukt LiF umfasst.

4. Lithiumionenbatterie-Kathodenaufschlämmung auf Wasserbasis nach Anspruch 3, wobei das Lithium in LiF von der Primärpartikeloberfläche stammt.

5. Lithiumionenbatterie-Kathodenaufschlämmung auf Wasserbasis nach Anspruch 3 oder 4, wobei das Fluor in dem LiF umfassenden Reaktionsprodukt von einem teilweise zersetzten fluorhaltigen Polymer stammt, das in der zweiten äußeren Schicht vorhanden ist.

6. Lithiumionenbatterie-Kathodenaufschlämmung auf Wasserbasis nach einem der Ansprüche 1 bis 4, wobei die erste innere Überzugsschicht aus einer LiF-Folie mit einer Dicke von mindestens 0,5 nm besteht.

7. Lithium-Ionenbatterie-Kathodenaufschlämmung auf Wasserbasis nach einem der Ansprüche 1 bis 6, wobei das Lithium-Übergangsmetalloxid die allgemeine Formel Li₁₊ₐM₁₋ₐO_{2±b} M'ₖ Sₘ hat, wobei -0,03<a<0,06, b<0,02, wobei M =NiₓMn_{y}Co_{z}, wobei x>0, y>0, z>0; x+y+z=1; und x/y ≥ 1, und wobei M' aus entweder einem oder mehreren Elementen der Gruppe Ca, Sr, Y, La, Ce und Zr besteht, wobei 0≤k≤0,1, wobei k in Gew.-% ausgedrückt ist; und 0≤m≤0,6, wobei m in Mol-% ausgedrückt ist.

8. Lithiumionenbatterie-Kathodenaufschlämmung auf Wasserbasis nach Anspruch 7, wobei 0,33≤x≤0,7 und 0,1<z<0,35.

9. Lithiumionenbatterie-Kathodenaufschlämmung auf Wasserbasis nach Anspruch 7, wobei 0,4≤x≤0,6 und x/y>1.

10. Lithiumionenbatterie-Kathodenaufschlämmung auf Wasserbasis nach Anspruch 1, wobei das fluorhaltige Polymer eines von PVDF, PVDF-HFP oder PTFE ist.

11. Lithiumionenbatterie-Kathodenaufschlämmung auf Wasserbasis nach einem der vorhergehenden Ansprüche, umfassend ein leitfähiges Mittel und ein Bindemittel auf Wasserbasis.

12. Verwendung der Lithiumionenbatterie-Kathodenaufschlämmung auf Wasserbasis nach einem der Ansprüche 1 bis 6 bei der Herstellung einer Kathode für eine Lithiumionenbatterie, wobei die Kathode ein Aluminiumsubstrat umfasst.

13. Verwendung der Lithiumionenbatterie-Kathodenaufschlämmung auf Wasserbasis nach einem der Ansprüche 1 bis 6 bei der Herstellung einer Lithiumionenbatterie für Kraftfahrzeuge.

## Revendications

1. Suspension de cathode à base d'eau pour batterie au lithium-ion comprenant un agent conducteur et/ou un liant à base d'eau et comprenant un matériau actif de cathode comprenant une poudre d'oxyde de métal de transition et de lithium, dans laquelle la poudre d'oxyde de métal de transition et de lithium est constituée d'agglomérats de particules primaires, les particules primaires comprenant une couche de revêtement comprenant un polymère, le polymère étant un polymère contenant du fluor comprenant au moins 50 % en poids de fluor, dans laquelle la couche de revêtement comprend une première couche de revêtement interne et une seconde couche de revêtement externe, la seconde couche externe comprenant le polymère contenant du fluor, et la première couche interne étant constituée d'un produit de réaction du polymère contenant du fluor et de la surface des particules primaires.

2. Suspension de cathode à base d'eau pour batterie au lithium-ion selon la revendication 1, dans laquelle la couche de revêtement est hydrophobe.

3. Suspension de cathode à base d'eau pour batterie au lithium-ion selon la revendication 1 ou 2, dans laquelle le produit de réaction comprend du LiF.

4. Suspension de cathode à base d'eau pour batterie au lithium-ion selon la revendication 3, dans laquelle le lithium dans le LiF provient de la surface des particules primaires.

5. Suspension de cathode à base d'eau pour batterie au lithium-ion selon les revendications 3 ou 4, dans laquelle le fluor dans le produit de réaction comprenant du LiF provient de polymère contenant du fluor partiellement décomposé présent dans la seconde couche externe.

6. Suspension de cathode à base d'eau pour batterie au lithium-ion selon l'une quelconque des revendications 1 à 4, dans laquelle la première couche de revêtement interne est constituée d'un film de LiF avec une épaisseur d'au moins 0,5 nm.

7. Suspension de cathode pour batterie au lithium-ion selon l'une quelconque des revendications 1 à 6, dans laquelle l'oxyde de métal de transition et de lithium a la formule générale Li₁₊ₐM₁₋ₐO_{2+b} M'ₖ Sₘ avec -0,03 < a < 0,06, b < 0,02, dans laquelle M =NiₓMn_{y}Co_{z}, avec x > 0, y > 0, z > 0 ; x + y + z = 1 ; et x/y ≥ 1 et dans laquelle M' est constitué de l'un ou l'autre parmi un ou plusieurs éléments du groupe Ca, Sr, Y, La, Ce et Zr, avec 0 ≤ k ≤ 0,1, k étant exprimé en % en poids ; et 0 ≤ m ≤ 0,6, m étant exprimé en % en moles.

8. Suspension de cathode à base d'eau pour batterie au lithium-ion selon la revendication 7, dans laquelle 0,33 ≤ x ≤ 0,7 et 0,1 < z < 0,35.

9. Suspension de cathode à base d'eau pour batterie au lithium-ion selon la revendication 7, dans laquelle 0,4 ≤ x ≤ 0,6 et x/y > 1.

10. Suspension de cathode à base d'eau pour batterie au lithium-ion selon la revendication 1, dans laquelle le polymère contenant du fluor est l'un de PVDF, PVDF-HFP ou PTFE.

11. Suspension de cathode à base d'eau pour batterie au lithium-ion selon l'une quelconque des revendications précédentes comprenant un agent conducteur et un liant à base d'eau.

12. Utilisation de la suspension de cathode à base d'eau pour batterie au lithium-ion selon l'une quelconque des revendications 1 à 6, dans la fabrication d'une cathode pour une batterie à l'ion lithium, dans laquelle la cathode comprend un substrat en aluminium.

13. Utilisation de la suspension de cathode à base d'eau pour batterie au lithium-ion selon l'une quelconque des revendications 1 à 6, dans la fabrication d'une batterie au lithium-ion pour automobile.
